(19) **Europäisches Patentamt European Patent Office Office européen des brevets**

(11) **EP 3 007 297 B1**

(12) **EUROPEAN PATENT SPECIFICATION**

(45) Date of publication and mention
of the grant of the patent:
**31.10.2018 Bulletin 2018/44**

(21) Application number: **14800425.2**

(22) Date of filing: **22.05.2014**

(51) Int Cl.:
*H02J 3/18* (2006.01)     *H02J 3/01* (2006.01)

(86) International application number:
**PCT/JP2014/063542**

(87) International publication number:
**WO 2014/189097 (27.11.2014 Gazette 2014/48)**

(54) **MULTILEVEL CONVERTER FOR REACTIVE POWER COMPENSATION**

MEHRSTUFIGER WANDLER FÜR BLINDLEISTUNGSKOMPENSATION

CONVERTISSEUR MULTI-NIVEAUX POUR COMPENSATION DE PUISSANCE RÉACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.05.2013 JP 2013109749**

(43) Date of publication of application:
**13.04.2016 Bulletin 2016/15**

(73) Proprietor: **Kabushiki Kaisha Toshiba
Minato-ku
Tokyo 105-8001 (JP)**

(72) Inventors:
• **NAKAZAWA, Yosuke**
  **Tokyo 105-8001 (JP)**
• **HASEGAWA, Ryuta**
  **Tokyo 105-8001 (JP)**
• **TAMADA, Shunsuke**
  **Tokyo 105-8001 (JP)**
• **MURAO, Takeru**
  **Tokyo 105-8001 (JP)**
• **IROKAWA, Shoichi**
  **Tokyo 105-0014 (JP)**

(74) Representative: **AWA Sweden AB
P.O. Box 11394
404 28 Göteborg (SE)**

(56) References cited:
EP-A1- 2 416 486     EP-A1- 2 541 752
WO-A1-2006/064742    WO-A1-2010/145706
WO-A1-2013/077421    JP-A- 2010 233 411
JP-A- 2011 045 210    JP-A- 2011 176 955

**Description**

TECHNICAL FIELD

Embodiments of the present disclosure relate to a power which injects or absorbs reactive power.

BACKGROUND ART

Reactive power compensators that adjust reactive power in power systems are widely applied for the purposes of constant voltage control and system stabilization in long-distance power transmission systems. A system voltage greatly affects to the amount of reactive power in the system rather than active power. Hence, when, for example, the system voltage is low, the reactive power compensators inject the reactive power into the system, or absorb the reactive power in the opposite case. Such reactive power compensators have been widely applied for the purposes of, in addition to the constant voltage control, the system stabilization, and the phase modification, suppression of a voltage flicker relative to a load and compensation of unbalanced loading.

Recently, large-scale power supply facilities based on renewable energy, such as ocean wind power generators and solar power generators, are being constructed one after another, and it is expected that such facilities are becoming more popular. When, however, it is attempted to transmit large power from such large-scale renewable energy power generation plants to consumer sites like a large city over a long distance, due to a phase change and a voltage rise originating from the impedance of AC power transmission networks, power transmission lines may become unstable, and it may become difficult to transmit power beyond a certain capacity. Hence, the application field of the reactive power compensators is now further spreading.

Some reactive power compensators include an inverter that is connected with a power system via an isolation transformer, generate a reactive current in a direction and in a phase of stabilizing an AC system, and supply the generated current to a power system, thereby adjusting the voltage of the power system. The inverter includes a DC capacitor that serves as a DC voltage source, and converts DC of the DC capacitor into AC by switching operation of switching elements. As for such an inverter, three-phase two-level inverters and three-phase three-level inverters are frequently used. In particular, a reactive power compensator that is the three-phase two-level inverter includes six semiconductor elements which are in the minimum requisite number to construct a power converter that outputs three-phase AC from DC. Hence, the downsizing and cost reduction are accomplishable.

When, however, the three-phase two-level inverter is applied, if an input DC voltage is Vdc, two values that are +Vdc/2 and -Vdc/2 are switched for each phase by pulse width modulation through a PWM control, and thus the output voltage waveform becomes a pseudo AC waveform. In this case, reactive power compensators are unable to increase a PWM switching frequency since high-voltage switching elements are applied, such a reactive power compensator needs to place, at a three-phase AC output, a filter that includes a reactor and a capacitor in order to reduce the switching harmonic (see, for example, Patent Document 1).

This filter needs to have a large filter capacity so as to reduce harmonic components flowing to the power system up to a level that does not affect other apparatuses. This results in cost and weight increase of reactive power compensators.

Hence, reactive power compensators which are capable of outputting fine voltage steps by connecting plural inverters in series, and which output multi-stage stepwise voltage waveforms are recently researched and developed. This is because when the waveform of an output voltage and that of an output current become further similar to a sine wave by multi-staging, there is an advantage that the filter to reduce the switching harmonic becomes unnecessary.

When, however, plural inverters are connected in series, it becomes quite difficult to control voltage balancing among the respective DC capacitors. When the voltages among the respective DC capacitors are unbalanced, it is difficult to obtain desired output voltage, and the voltage applied to each switching element exceeds the maximum rated voltage, and thus each component of the reactive power compensator like the switching element may be damaged.

Hence, as for the plural inverters connected in series, a scheme is proposed which adopts delta-connection to the inverter group in each phase, and which controls a circulating current within the delta connection, thereby attempting to balance the voltages among the DC capacitors among respective phases and among respective stages (see, for example, Patent Document 2).

CITATION LIST

PATENT LITERATURES

Patent Document 1: JP2003-189474 A
Patent Document 2: JP2011-45210 A

Although the harmonic components are to be reduced by a power-source circuit that includes plural inverters connected in series, the voltage waveform does not become an ideal sine wave, but is in a multi-stage stepwise shape. That is, a harmonic voltage is still contained. In addition, as for the sum of the fundamental components of the voltages in respective phases, it may become zero when a control is performed so as to equalize the amplitude and to shift the phases by 120 degrees from each other, respectively. However, the harmonic component still does not become zero.

In this case, even in the case of reactive power compensators that include plural inverters connected in series, when the reactance in the delta connection is zero, due to the harmonic components of the voltage output by the power-source, an excessive short-circuit circulating current flows in the delta connection. This may damage each component of the reactive power compensator like the switching element.

Hence, in the case of reactive power compensators that include plural inverters connected in series and provided in the delta connection, a buffer reactor in each phase is necessary so as to add a restriction that prevents the short-circuit current from becoming excessive. Since DC capacitor charging/discharging current flows through the buffer reactor in order to accomplish the original performance of the reactive power compensator, the core of the buffer reactor needs a large cross-sectional area and a large number of turns of winding so as not to cause a magnetic saturation due to DC magnetic fluxes produced by the DC charging/discharging current. Consequently, the volume and the weight of the core become large. The arrangement described in EP 2 416 486 A1, see particularly Fig. 12, does not need buffer reactors in each phase. However, it requires a large number of windings in the isolation transformer to connect the power converter to the three-phase grid.

That is, although the reactive power compensators that include plural inverters connected in series in each phase and in the delta connection makes the harmonic suppressive filter unnecessary, such a compensator needs a buffer reactor in exchange for the unnecessity of the filter, and thus reduction of the dimension of the apparatus and costs thereof is not accomplished yet.

SUMMARY

Embodiments of the present disclosure have been made to address the aforementioned technical problems, and it is an objective to provide a power converter that does not need both harmonic suppressive filter and buffer reactor.

A power converter according to an embodiment of the present disclosure injects or absorbs reactive power for a three-phase AC system, and the power converter includes:

a unitary converter block comprising a DC voltage source, the unitary converter block converting DC of the DC voltage source into AC;
a power-source circuit block in each phase comprising a plurality of the unitary converter blocks connected in series;
a delta connection block including the power-source circuit blocks in the respective phases in delta connection; and
an isolation transformer between the three-phase AC system and the delta connection block, the isolation transformer comprising a winding inserted on a circuit of the delta connection.

The unitary converter block may include two legs and a capacitor, each leg including two self-extinguishing switching elements connected in series, and the two legs and the capacitor connected in parallel, the power-source circuit block in each phase may include a pair of arms each including the plurality of unitary converter blocks connected in series, the one arm has a first end connected with a positive side of the secondary winding of the three-winding isolation transformer, the other arm has first end connected with a positive side of the tertiary winding of the three-winding isolation transformer, the one arm has a second end connected with a second end provided in the other arm of the other phase, a negative side of the secondary winding and a negative side of the tertiary winding may be connected with each other in each phase and among the three phases, and the primary winding of the three-winding isolation transformer may have a positive side connected with the AC system, and have a negative side connected with each other among the three phases.

BRIEF DESCRIPTION OF DRAWINGS

FIG. 1 is a schematic structural diagram of each reactive power compensator;
FIG. 2 is a structural diagram of an H-bridge unitary converter block;
FIG. 3 is a structural diagram of a reactive power compensator according to a first embodiment;

FIG. 4 is a part of an equivalent circuit diagram of the reactive power compensator according to the first embodiment;

FIG. 5 is a structural diagram illustrating an isolation transformer of a reactive power compensator according to a second embodiment; and

FIG. 6 is a structural diagram of a reactive power compensator according to a third embodiment.

DESCRIPTION OF EMBODIMENTS

(First Embodiment)

(Structure)

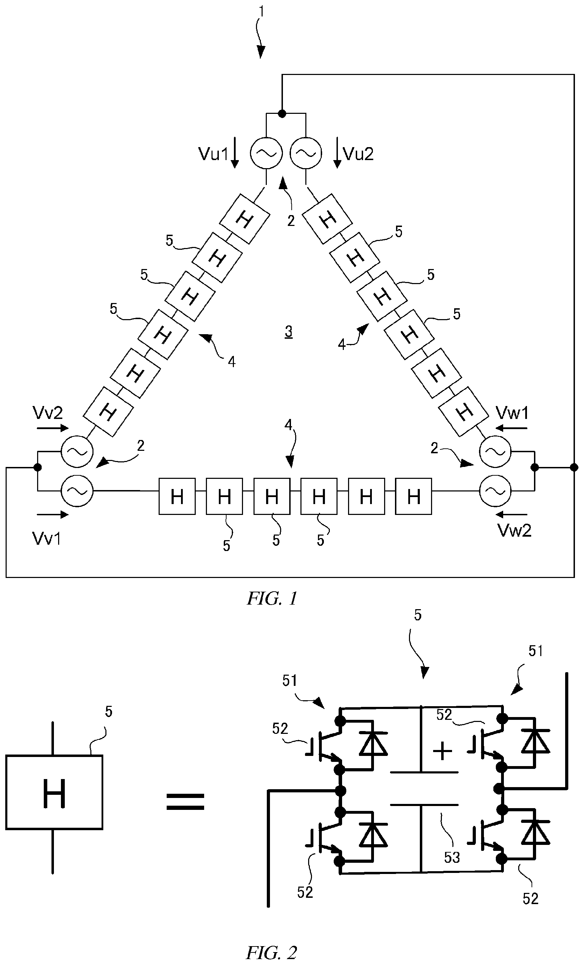

An explanation will be below given of a reactive power compensator according to a first embodiment with reference to the figures. FIG. 1 is a structural diagram of a reactive power compensator according to a first embodiment. This reactive power compensator 1 is a power converter that injects or absorbs reactive power through isolation transformers 2 for an AC system of three-phase 50/60 Hz. Reactive power is injected to the AC system when an AC system voltage is low, and the reactive power is absorbed from the AC system when the AC system voltage is high, thereby adjusting the voltage of the AC system by utilizing the impedance of the AC system.

This reactive power compensator 1 includes a delta connection block 3. Provided in each phase of the delta connection block 3 is a power-source circuit block 4 that outputs a phase voltage in a multi-stage stepwise waveform. The isolation transformers 2 are provided in the delta connection block 3, and isolate the AC system from the delta connection block 3. The power-source circuit block 4 is a group of H-bridge unitary converter blocks 5 connected in series.

As illustrated in FIG. 2, each H-bridge unitary converter block 5 includes two legs 51 each including two switches 52 connected in series, and a DC capacitor 53. The two legs 51 and the DC capacitor 53 are connected in parallel. The switch 52 is a reverse-conduction switch that includes a self-extinguishing type semiconductor switching element like an IGBT which flows a current in one direction when turned ON, and a feedback diode connected with this semiconductor switching element in reverse parallel therewith. A self-extinguishing switching element that can be controlled to turn ON/OFF, such as GTO, GCT, or MOSFET, are applicable instead of the IGBT.

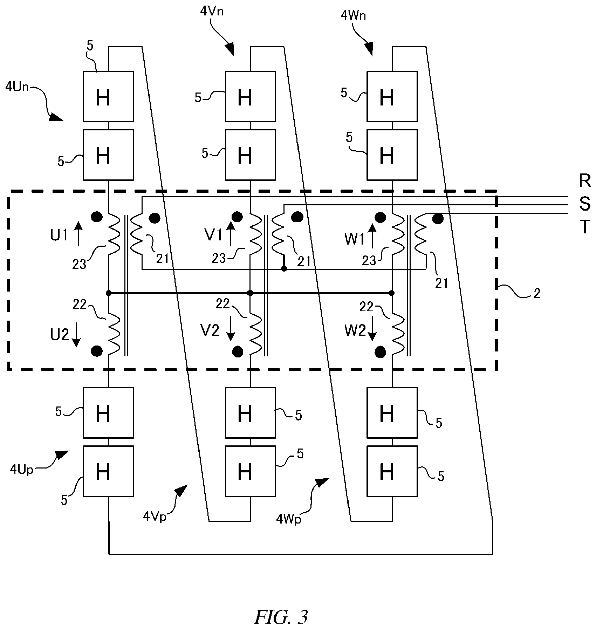

More specifically, as illustrated in FIG. 3, the power-source circuit block 4 in each phase includes positive arms 4Up, 4Vp, and 4Wp, and, negative arms 4Un, 4Vn, and 4Wn each including N number of H-bridge unitary converter blocks 5. Windings of the isolation transformers 2 in respective phases, such as secondary windings 22 and tertiary windings 23 other than primary windings 21, are inserted between the positive and negative arms. In other words, windings of the isolation transformers 2 in respective phases, such as the secondary windings 22 and the tertiary windings 23 other than the primary windings 21, are inserted among the power-source circuit block 4 in a UW phase, the power-source circuit block 4 in a WV phase, and the power-source circuit block 4 in a VU phase, and each power-source circuit block 4 include the N number of H-bridge unitary converter blocks 5. In this embodiment, as an example, N = 4.

That is, the isolation transformers 2 are three single-phase three-winding transformers. The primary winding is in a star connection, while the secondary and tertiary windings are connected in series, and those windings are inserted in the delta connection block 3. The positive side of the primary winding 21 of the U-phase single-phase three-winding transformer is connected with an R phase of the AC system, the positive side of the primary winding 21 of the V-phase single-phase three-winding transformer is connected with an S phase, and the positive side of the primary winding 21 of the W-phase single-phase three-winding transformer is connected with the T-phase of the AC system. The negative side of the primary winding 21 of the single-phase three-winding transformer in each phase is connected with each other.

One end of the U-phase positive arm 4Up is connected with the positive side of the secondary winding 22 of the U-phase single-phase three-winding transformer, and one end of the U-phase negative arm 4Un is connected with the positive side of the tertiary winding 23 of the U-phase single-phase three-winding transformer. Likewise, one end of the V-phase positive arm 4Vp is connected with the positive side of the secondary winding 22 of the V-phase single-phase three-winding transformer, and one end of the V-phase negative arm 4Vn is connected with the positive side of the tertiary winding 23 of the V-phase single-phase three-winding transformer. Still further, one end of the W-phase positive arm 4Wp is connected with the positive side of the secondary winding 22 of the W-phase single-phase three-winding transformer, and one end of the W-phase negative arm 4Wn is connected with the positive side of the tertiary winding 23 of the W-phase single-phase three-winding transformer.

The other end of the U-phase positive arm 4Up not connected with the isolation transformer 2 is connected with the other end of the W-phase negative arm 4Wn not connected with the isolation transformer 2. Likewise, the other end of the V-phase positive arm 4Vp not connected with the isolation transformer 2 is connected with the other end of the U-phase negative arm 4Un not connected with the isolation transformer 2. Still further, the other end of the W-phase positive arm 4Wp not connected with the isolation transformer 2 is connected with the other end of the V-phase negative arm 4Vn not connected with the isolation transformer 2.

In addition, the respective negative sides of the secondary windings 22 and tertiary windings 23 of the single-phase three-winding isolation transformers 2 in the U-phase, V-phase, and W-phase are connected with each other, and thus the negative sides are connected with each other across the three phases.

(Action)

This reactive power compensator 1 has a control circuit (unillustrated) that controls the switching operations of the switching elements in such a way that the H-bridge unitary converter blocks 5 in the same phase output sinusoidal voltages in the same phase, and the H-bridge unitary converter blocks 5 in respective phases output sinusoidal voltages shifted by 120 degrees.

That is, input to the reactive power compensator 1 are a reactive current command value IdRef output to the AC system, and an effective current command value IqRef that compensates the loss from the AC system in order to maintain a constant capacitor voltage of the H-bridge unitary converter block 5.

The control circuit of the reactive power compensator 1 detects AC currents at the respective primary windings 21 of the isolation transformers 2 in the U-phase, V-phase, and W-phase, and performs a feedback control so as to cause a reactive current detection value Id and an effective current detection value Iq that are resultants of dq coordinate axis transformation on system-voltage AC synchronization to be consistent with the respective command values IdRef and IqRef, thereby calculating a d-axis voltage command value Vd and a q-axis voltage command value Vq by the use of the feedback control. In addition, the controller performs a dq reverse coordinate transformation on those d-axis voltage command value Vd and a q-axis voltage command value Vq, thereby calculating a U-phase voltage command value VuRef, a V-phase voltage command value VvRef, and a W-phase voltage command value VwRef.

Next, the control circuit of the reactive power compensator 1 calculates a circulating current 10 that suppresses an unbalancing of the capacitor voltages in the H-bridge unitary converter blocks 5.

In this case, the average value of the capacitor voltage of the H-bridge unitary converter block 5 in the U-phase positive arm 4Up, the average value of the capacitor voltage of the H-bridge unitary converter block 5 in the U-phase negative arm 4Un, the average value of the capacitor voltage of the H-bridge unitary converter block 5 in the V-phase positive arm 4Vp, the average value of the capacitor voltage of the H-bridge unitary converter block 5 in the V-phase negative arm 4Vn, the average value of the capacitor voltage of the H-bridge unitary converter block 5 in the W-phase positive arm 4Wp, the average value of the capacitor voltage of the H-bridge unitary converter block 5 in the W-phase negative arm 4Wn, and the average value of the capacitor voltages of the whole H-bridge unitary converter blocks 5 are defined as follows.

The average value of the capacitor voltage of the H-bridge unitary converter block 5 in the U-phase positive arm: VuP_Cave;

The average value of the capacitor voltage of the H-bridge unitary converter block 5 in the U-phase negative arm: VuN_Cave;

The average value of the capacitor voltage of the H-bridge unitary converter block 5 in the V-phase positive arm: VvP_Cave;

The average value of the capacitor voltage of the H-bridge unitary converter block 5 in the V-phase negative arm: VvN_Cave;

The average value of the capacitor voltage of the H-bridge unitary converter block 5 in the W-phase positive arm: VwP_Cave;

The average value of the capacitor voltage of the H-bridge unitary converter block 5 in the W-phase negative arm: VwN_Cave; and

The average value of the capacitor voltages of the whole H-bridge unitary converter blocks 5: V_Cave

The average value of the capacitor voltages of the whole H-bridge unitary converter blocks 5 is obtainable by averaging the capacitor-voltage average values of the arms in the respective phases. That is, the control circuit calculates V_Cave = (VuP_Cave + VuN_Cave + VvP_Cave + VvN_Cave + VwP_Cave + VwN_Cave)/6.

Next, the control circuit obtains a circulating current command value IORef from the following equation A. In this formula, G(s) is a control gain, s is a Laplace operator, a multiplication part relative to G(s) is an error signal, and the arithmetic equation is to obtain IORef that is a control input by a feedback control, such as a P control, a PI control or a PID control.

[Equation A]

```
I0Ref=G(s)×{((VuP_Cave+VwN_Cave)/2
-V_Cave)×sin(ωt+π/6)
+((VvP_Cave+VuN_Cave)/2-V_Cave)×si
n(ωt+π/6-2π/3)
+((VwP_Cave+VvN_Cave)/2-V_Cave)×si
n(ωt+π/6+2π/3)}
```

In addition, the control circuit obtains, from the following equation B, a sinusoidal voltage command value VORef in the delta connection block 3 in order to accomplish balancing of the capacitor voltages by the feedback control that causes the circulating current 10 to be consistent with the circulating current command value IORef. In this formula, H(s) is a control gain, s is a Laplace operator, a multiplication part relative to H(s) is an error signal, and the arithmetic equation is to obtain VORef that is a control input by a feedback control, such as a P control, a PI control or a PID control.

[Equation B]

```
V0Ref=H(s)×(I0Ref-I0)
```

Next, the control circuit adds the voltage command value VORef for balancing control on the capacitor voltages to the voltage command values VuRef, VvRef, and VwRef in the three phases for the aforementioned system voltage adjustment, thereby determining a voltage to be output by each H-bridge unitary converter block 5, and performing a PWM control on the switching element.

That is, the control circuit performs the following calculations for a voltage VuP of the H-bridge unitary converter block 5 in the U-phase positive arm 4Up, a voltage VuN of the H-bridge unitary converter block 5 in the U-phase negative arm 4Un, a voltage VvP of the H-bridge unitary converter block 5 in the V-phase positive arm 4Vp, a voltage VvN of the H-bridge unitary converter block 5 in the V-phase negative arm 4Vn, a voltage VwP of the H-bridge unitary converter block 5 in the W-phase positive arm 4Wp, and a voltage VwN of the H-bridge unitary converter block 5 in the W-phase negative arm 4Wn. The difference term in each equation shows that a connection relationship in the delta connection is taken into consideration.

```
VuP=VuRef-VwRef+V0Ref
```

```
VuN=VuRef-VvRef-V0Ref
```

```
VvP=VvRef-VuRef+V0Ref
```

```
VvN=VvRef-VwRef-V0Ref
```

```
VwP=VwRef-VvRef+V0Ref
```

```
VwN=VwRef-VuRef-V0Ref
```

According to such a reactive power compensator 1, the switching operations of the switching elements are controlled in such a way that the H-bridge unitary converter blocks 5 in the same phase output sinusoidal voltages in the same phase, and the H-bridge unitary converter blocks 5 in the respective phases output sinusoidal waves shifted by 120 degrees. Accordingly, a reactive current to be output to the AC system and an effective current that compensates the loss from the AC system in order to maintain the constant capacitor voltages among the H-bridge unitary converter blocks 5 are generated.

In addition, the sinusoidal wave of the output voltage is in a multi-stage stepwise shape in a precise sense, and contains harmonic components that do not become zero even if the sum of the respective phase voltages are obtained. However, this reactive power compensator 1 utilizes the leakage inductance produced in each winding of the isolation transformer 2 instead of the reactance of conventional buffer reactors, thereby suppressing a sharp increase of the circulating current.

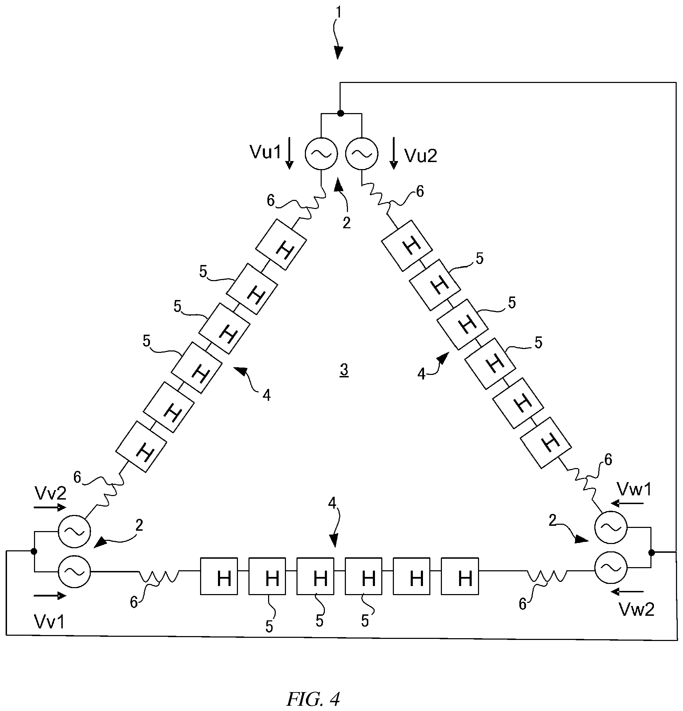

That is, according to this circuit structure, the windings 22, 23 of the isolation transformer 2 are present in the flowing path of the circulating current, and in the single-phase three-winding isolation transformer 2 in each phase, leakage inductances that are irrelevant to a mutual induction are produced in the secondary winding 22 and the tertiary winding 23 according to a coupling coefficient. As illustrated in FIG. 4, such leakage inductance components create, in the delta connection through which the circulating current flows, an equivalent circuit to a situation in which a reactance 6 is produced adjacent to the secondary winding 22 and the tertiary winding 23. Hence, even in the delta connection block 3 that has no buffer reactor, the reactance is produced in the delta connection block 3, and thus a sharp increase of the circulating current is suppressed.

(Effect)

As explained above, according to the power converter of the first embodiment, the power-source circuit block 4 in each phase is formed by connecting the plural H-bridge unitary converter blocks 5 in series, the delta connection block 3 is formed by connecting the power-source circuit blocks 4 in the respective phases, and the windings 22, 23 of the isolation transformers 2 that isolate the three-phase AC system from the delta connection block 3 are inserted on the circuit portion of the delta connection block 3. This power converter is applied as, for example, a reactive power compensator which injects or absorbs reactive power to and from the three-phase AC system.

Hence, a voltage/current waveform that is a lower level harmonic is outputtable without a harmonic suppressive filter, a sharp increase of a DC circulating current is suppressible without a placement of a high-cost and space-occupying reactor like a buffer reactor, and an average value of capacitor voltages among the unitary converter blocks is controllable so as to be constant. Therefore, it becomes possible to provide a compact power converter.

As explained above, since it is appropriate if the reactance is produced in the delta connection block 3 by inserting the isolation transformers 2 in the delta connection block 3 and by utilizing the leakage inductances, the number of windings connected in series and in the delta connection block 3 is at least one, and the insertion location of the winding is an input terminal or an output terminal in each phase as well, in addition to a location between the positive arm 4Up, 4Vp, 4Wp and the negative arm 4Un, 4Vn, 4Wn.

(Second Embodiment)

As for the isolation transformer 2, although three numbers of single-phase three-winding transformers are applicable like the first embodiment, various structures are adoptable. For example, a structure having two numbers of single-phase transformers in each phase is also adoptable.

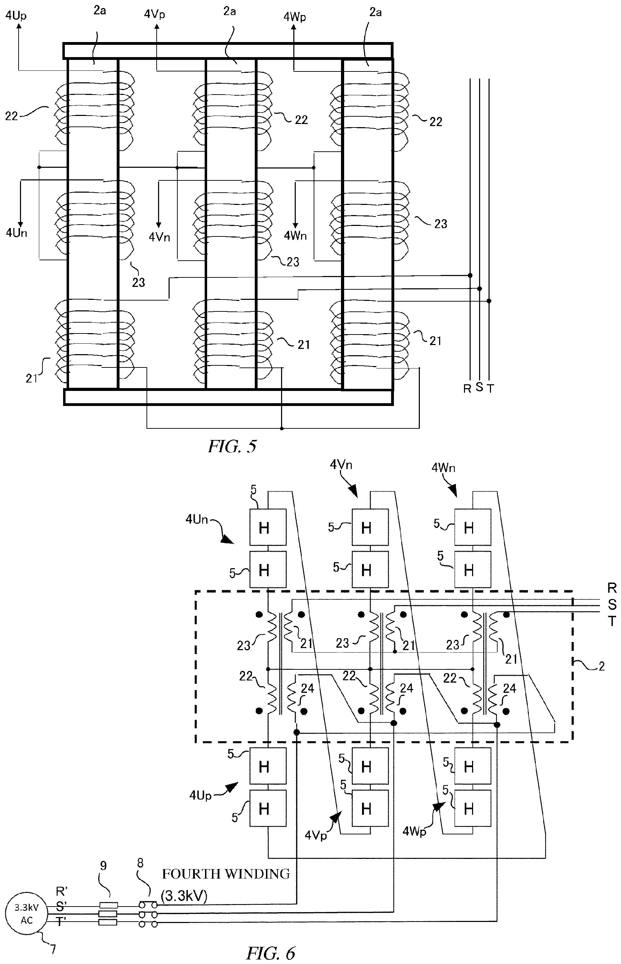

In addition, as illustrated in FIG. 5, the isolation transformer 2 is also adoptable to a three-phase three-leg transformer that has three leg cores 2a connected one another through common magnetic paths . In the case of the three-phase three-leg transformer, each leg corresponds to each phase, one winding serves as a primary winding, the other two windings serve as secondary windings. In addition, one of the secondary windings is utilized as the secondary winding 22 that is connected with the positive arms 4Up, 4Vp, and 4Wp, while the other secondary winding is utilized as the tertiary winding 23 that is connected with the negative arms 4Un, 4Vn, and 4Wn.

When the isolation transformer 2 is the three-phase three-leg transformer, since charging/discharging currents generated by the DC capacitors 5 in the respective phases are shifted by 120 degrees in at least the fundamental component, DC magnetic fluxes generated by such charging/discharging currents are cancelled with each other in the common magnetic paths. Hence, a DC bias magnetism is not likely to occur at the core 2a, and thus magnetic saturation is also not likely to occur. Accordingly, downsizing of the cores 2a of the isolation transformer 2 is accomplished. In addition, since the total six leg cores constituted by two leg cores in each phase are replaced by the total three cores 2a constituted by one leg core in each phase, the downsizing of the isolation transformer is also accomplished in this point.

Even if the single-phase transformer is applied, when the cores 2a of the two single-phase transformers in each phase are shared commonly, and the primary winding 21, the secondary winding 22, and the tertiary winding 23 are wound around the cores 2a in the respective phases, DC magnetic fluxes generated by DC charging/discharging currents of the DC capacitors 53 are cancelled one another. Hence, a DC bias magnetism is not likely to occur at the core 2a, and thus magnetic saturation is also not likely to occur. Accordingly, downsizing of the core 2a of the isolation transformer 2 is accomplishable. For example, the secondary winding 22 and the tertiary winding 23 may be wound so as to have opposite polarities.

(Third Embodiment)

An explanation will be given of an initial charging operation to the DC capacitor 53 of the H-bridge unitary converter block 5. As for the initial charging operation to the DC capacitor 53, charging in various forms are applicable, and for example, initial charging power may be supplied from a backbone system like a long-distance power transmission system via a resistor and a breaker.

In addition, as illustrated in FIG. 6, initial charging power may be supplied from a low-voltage AC power source 7 different from the backbone system. That is, as illustrated in FIG. 6, according to this reactive power compensator 1, the isolation transformer 2 provided in the delta connection block 3 is further provided with a fourth winding 24, and this fourth winding 24 and the low-voltage AC power source 7 are connected with each other via a breaker 8 and a resistor 9.

The fourth winding 24 of the isolation transformer 2 is the fourth winding of the single-phase transformer in each R-phase, S-phase, and T-phase. Each positive terminal of the fourth winding 24 in each R-phase, S-phase, and T-phase is connected with the low-voltage AC power source 7. The positive terminal of the fourth winding 24 in the R-phase is connected with the negative terminal in the T-phase, the positive terminal in the S-phase is connected with the negative terminal in the R-phase, and the positive terminal of the T-phase is connected with the negative terminal of the S-phase. Hence, the delta connection is constructed as explained above.

An example and applicable low-voltage AC power source 7 is a general power source like 3.3 kV, or a variable voltage power source like an inverter. The resistor 9 is applied to suppress an inrush current from the low-voltage AC power source.

The operation at the time of initial charging of the DC capacitor 53 by the fourth winding 24 and the low-voltage AC power source 7 is as follow. At the time that the reactive power compensator 1 is activated, all DC capacitors 53 of the H-bridge unitary converter blocks 5 are discharged and are zero voltage.

First, at the time of the activation of the reactive power compensator 1, the breaker at the side of primary winding 21 is open-circuited, and the breaker 8 at the side of fourth winding 24 is initially loaded. In this case, supplied power from the low-voltage AC power source 7 is charged in the DC capacitor 53 of the H-bridge unitary converter block 5 via the resistor 9, the fourth winding 24 of the isolation transformer 2, the secondary winding 22, and the tertiary winding 23.

Next, after the charging is performed for a longer time than a time constant $T = C \times R$ (seconds) where R is the resistance value of the resistor 9 and C is a total capacitance of the DC capacitors 53 in the H-bridge unitary converter blocks 5 by what corresponds to several series strings, the breaker 8 connected with the low-voltage AC power source 7 is open-circuited. Subsequently, the reactive power compensator 1 is transitioned to a normal running operation condition.

When the initial charging power is supplied from the backbone system via the resistor and the breaker, such a resistor needs to be a high rated-voltage type so as to suppress an inrush current originating from the backbone system. Hence, the costs of the reactive power compensator 1 increase. When, however, like this embodiment, the fourth winding 24 is added, and is connected with the low-voltage AC power source 7, and, charging power to the DC capacitor 53 is supplied from the low-voltage AC power source 7, the resistor 9 provided between the low-voltage AC power source 7 and the fourth winding 24 is allowed to have a rated voltage set to be low. Hence, the costs of the reactive power compensator 1 can be reduced.

(Other Embodiments)

Several embodiments of the present disclosure were explained in this specification, but those embodiments are merely presented as examples. More specifically, the present disclosure covers a combination of all of or some of the first to third embodiments. Such an embodiment can be carried out in various forms, and various omissions, replacements, and modifications are applicable. Such embodiments and modified forms thereof are within the scope of the invention as recited in the appended claims.

REFERENCE SIGNS LIST

| 1 | Reactive power compensator |
| 2 | Isolation transformer |
| 2a | Core |
| 21 | Primary winding |
| 22 | Secondary winding |
| 23 | Tertiary winding |
| 24 | Fourth winding |

| 3 | Delta connection block |
|---|---|
| 4 | Power-source circuit block |
| 4Up | U-phase positive arm |
| 4Un | U-phase negative arm |
| 4Vp | V-phase positive arm |
| 4Vn | V-phase negative arm |
| 4Wp | W-phase positive arm |
| 4Wn | W-phase negative arm |
| 5 | H-bridge unitary converter block |
| 51 | Leg |
| 52 | Switch |
| 53 | DC capacitor |
| 6 | Reactance |
| 7 | Low-voltage AC power source |
| 8 | Breaker |
| 9 | Resistor |

**Claims**

1. A power converter (1) configured to inject or absorb reactive power for a three-phase AC system, the power converter comprising:

   a power-source circuit block (4) in each phase, comprising a plurality of unitary converter blocks (5) connected in series, wherein each unitary converter block comprises two legs (51) and a capacitor (53), each leg comprising two self-extinguishing switching elements (52) connected in series, and the two legs and the capacitor connected in parallel, the unitary converter block converting DC into AC;
   a delta connection block (3) including the power-source circuit blocks in the respective phases in delta connection; and
   an isolation transformer (2) between the three-phase AC system and the delta connection block, the isolation transformer comprising a winding inserted on a circuit of the delta connection,
   wherein:

   the power-source circuit block in each phase comprises a positive arm (4Up, 4Vp, 4Wp) and a negative arm (4Un, 4Vn, 4Wn) each comprising the plurality of unitary converter blocks connected in series;
   the isolation transformer comprises a primary winding (21) at a three-phase AC system side, a secondary winding (22), and a tertiary winding (23);
   the secondary winding and the tertiary winding both in a same phase are connected in series and are inserted in the delta connection block between the positive arm and the negative arm;
   **characterized in that**
   the positive arm has a first end connected with a positive side of the secondary winding of the three-winding isolation transformer;
   the negative arm has a first end connected with a positive side of the tertiary winding of the three-winding isolation transformer;
   the positive arm has a second end connected with a second end provided in the negative arm of the other phase;
   a negative side of the secondary winding and a negative side of the tertiary winding are connected with each other in each phase and among the three phases; and
   the primary winding of the three-winding isolation transformer has a positive side connected with the AC system, and has a negative side connected with each other among the three phases.

2. The power converter according to claim 1, wherein the isolation transformer comprises a core around which the respective windings are commonly wound.

3. The power converter according to any one of claims 1 to 2, wherein the isolation transformer is a three-phase three-leg transformer that comprises a magnetic path commonly shared to the three phases.

**EP 3 007 297 B1**

**Patentansprüche**

1. Leistungswandler (1), der zum Einspeisen oder Absorbieren von Blindleistung für ein Dreiphasen-Wechselstromsystem konfiguriert ist, der Leistungswandler umfassend:

   einen Leistungsquellenschaltungsblock (4) in jeder Phase, umfassend mehrere einheitliche Wandlerblöcke (5), die in Reihe verbunden sind, wobei jeder einheitliche Wandlerblock zwei Schenkel (51) und einen Kondensator (53) umfasst,
   wobei jeder Schenkel zwei selbstlöschende Schaltelemente (52) die in Reihe verbunden sind, umfasst und die zwei Schenkel und der Kondensator parallel verbunden sind, wobei der einheitliche Wandlerblock Gleichstrom in Wechselstrom umwandelt;
   einen Delta-Verbindungsblock (3), der die Leistungsquellenschaltungsblöcke in den entsprechenden Phasen in Delta-Verbindung enthält; und
   einen Isolationstransformator (2) zwischen dem Dreiphasen-Wechselstromsystem und dem Delta-Verbindungsblock, wobei der Isolationstransformator eine Wicklung umfasst, die auf einer Schaltung der Delta-Verbindung eingesetzt ist,
   wobei:

   der Leistungsquellenschaltungsblock in jeder Phase einen positiven Arm (4Up, 4Vp, 4Wp) und einen negativen Arm (4Un, 4Vn, 4Wn) umfasst, die jeweils die mehreren einheitlichen Wandlerblöcke umfassen, die in Reihe verbunden sind;
   der Isolationstransformator eine Primärwicklung (21) an einer Seite des Dreiphasen-Wechselstromsystems, eine Sekundärwicklung (22) und eine Tertiärwicklung (23) umfasst;
   wobei die Sekundärwicklung und die Tertiärwicklung, beide in derselben Phase, in Reihe verbunden und in den Delta-Verbindungsblock zwischen der positive Arm und der negative Arm eingesetzt sind;
   **dadurch gekennzeichnet, dass**
   der positive Arm ein erstes Ende hat, das mit einer positiven Seite der Sekundärwicklung des Drei-Wicklungen-Isolationstransformators verbunden ist;
   der negative Arm ein erstes Ende hat, das mit einer positiven Seite der Tertiärwicklung des Drei-Wicklungen-Isolationstransformators verbunden ist;
   der positive Arm ein zweites Ende hat, das mit einem zweiten Ende verbunden ist, das im negativen Arm der anderen Phase vorgesehen ist;
   eine negative Seite der Sekundärwicklung und eine negative Seite der Tertiärwicklung miteinander in jeder Phase und unter den drei Phasen verbunden sind; und
   die Primärwicklung des Drei-Wicklung-Isolationstransformatorseine positive Seite hat, die mit dem Wechselstromsystem verbunden ist, und eine negative Seite hat, die unter den drei Phasen miteinander verbunden ist.

2. Leistungswandler nach Anspruch 1, wobei der Isolationstransformator einen Kern umfasst, um den die entsprechenden Wicklungen gemeinsam gewickelt sind.

3. Leistungswandler nach einem der Ansprüche 1 bis 2, wobei der Isolationstransformator ein Drei-Phasen-Drei-Schenkel-Transformator ist, der einen Magnetpfad umfasst, den sich die drei Phasen gemeinsam teilen.

**Revendications**

1. Convertisseur de puissance (1) configuré pour injecter ou absorber une puissance réactive pour un système CA triphasé, le convertisseur de puissance comprenant :

   un bloc de circuit de source de puissance (4) dans chaque phase, comprenant une pluralité de blocs de convertisseur unitaires (5) raccordés en série, dans lequel chaque bloc de convertisseur unitaire comprend deux branches (51) et un condensateur (53), chaque branche comprenant deux éléments de commutation auto-extinguibles (52) raccordés en série, et les deux branches et le condensateur étant raccordés en parallèle, le bloc de convertisseur unitaire convertissant de CC en CA ;
   un bloc de raccordement en triangle (3) comprenant les blocs de circuit de source de puissance dans les phases respectives en raccordement en triangle ; et
   un transformateur d'isolation (2) entre le système CA triphasé et le bloc de raccordement en triangle, le transformateur d'isolation comprenant un enroulement inséré sur un circuit du raccordement en triangle, dans lequel :

le bloc de circuit de source de puissance dans chaque phase comprend un bras positif (4Up, 4Vp, 4Wp) et un bras négatif (4Un, 4Vn, 4Wn), chacun comprenant la pluralité de blocs de convertisseur unitaires raccordés en série ;

le transformateur d'isolation comprend un enroulement primaire (21) à un côté de système CA triphasé, un enroulement secondaire (22) et un enroulement tertiaire (23) ;

l'enroulement secondaire et l'enroulement tertiaire dans une même phase sont raccordés en série et sont insérés dans le bloc de raccordement en triangle entre le bras positif et le bras négatif ;

**caractérisé en ce que** le bras positif comporte une première extrémité raccordée à un côté positif de l'enroulement secondaire du transformateur d'isolation à trois enroulements ;

le bras négatif comporte une première extrémité raccordée à un côté positif de l'enroulement tertiaire du transformateur d'isolation à trois enroulements ;

le bras positif comporte une deuxième extrémité raccordée à une deuxième extrémité prévue dans le bras négatif de l'autre phase ;

un côté négatif de l'enroulement secondaire et un côté négatif de l'enroulement tertiaire sont raccordés l'un à l'autre dans chaque phase et parmi les trois phases ; et

l'enroulement primaire du transformateur d'isolation à trois enroulements comporte un côté positif raccordé au système CA, et comporte un côté négatif raccordé l'un à l'autre parmi les trois phases.

2. Convertisseur de puissance selon la revendication 1, dans lequel le transformateur d'isolation comprend un noyau autour duquel les enroulements respectifs sont enroulés en commun.

3. Convertisseur de puissance selon l'une quelconque des revendications 1 et 2, dans lequel le transformateur d'isolation est un transformateur triphasé à trois branches comprenant une voie magnétique partagée en commun par les trois phases.

FIG. 1

FIG. 2

*FIG. 3*

*FIG. 4*

*FIG. 5*

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003189474 A
- JP 2011045210 A

- EP 2416486 A1